# EUROPEAN PATENT APPLICATION

(11) **EP 4 203 262 A1**
(43) Date of publication of application: **28.06.2023**
(21) Application number: 21217510.3
(22) Date of filing: 23.12.2021
(51) Int. Cl.: H02K 3/487

(54) **ELECTRIC EXCITED ROTOR HAVING AN INSULATION PAPER AND METHOD FOR PRODUCING THE SAME**

(71) Applicant: Valeo eAutomotive Germany GmbH, 91056 Erlangen (DE)
(72) Inventor: WIECZOREK, Christoph, 97616 Bad Neustadt a.d.Saale (DE); BACH, Regina, 97616 Bad Neustadt a.d.Saale (DE); SIEPKER, Carsten, 97616 Bad Neustadt a.d.Saale (DE); FINGER-ALBERT, Christian, 97616 Bad Neustadt a.d.Saale (DE)
(74) Representative: Valeo Powertrain Systems

(57) **Abstract**

The invention concerns a rotor comprising a rotor shaft configured to rotate around an axis of rotation, a rotor body formed of a stack of laminations having a plurality of teeth (21) projecting radially and slots (22) corresponding to space between two adjacent teeth, a field coil (3) wound around each tooth of the plurality of teeth (21), an insulation paper (120) extending axially and arranged on walls (23) of a respective slot between the rotor body and the field coil (3), and a wedge element (110) extending axially and arranged in the respective slot, the wedge element (110) being configured to be slid axially against the two adjacent teeth, the insulation paper (120) having two flap portions (121) projecting from the walls (23) of both the two adjacent teeth, the two flap portions (121) being configured to come against respectively two contact surfaces (111) of the wedge element (110).

## Description

### FIELD OF THE INVENTION

The present invention belongs to the field of rotary electric machines configured to be on board of an automotive vehicle, such as an electric vehicle (EV) or a hybrid vehicle (HV).

The present invention relates in particular to the field of electric excited rotors, also called wound rotors or slip ring rotors, integrated to rotary electric machines.

### BACKGROUND OF THE INVENTION

As is known, an electric or a hybrid automotive vehicle presents an electric drive comprising a rotary electric machine which need to be supplied with electric power, for instance by a high voltage power supply battery, to deliver a mechanical power in order to ensure the propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, notably the wheels of the vehicle.

In particular, it is known to have the rotor electrically excited. This type of rotors is commonly referred as wound rotors or slip ring rotors. Such a rotor comprises a rotor body formed of a stack of laminations having a plurality of teeth projecting radially, and a field coil wound around the plurality of teeth while being electrically insulated from the stack of laminations. Then, the field coil is connected to an external power supply through slip rings. The slip rings correspond to electro-mechanical devices configured to allow the exchange of electric power between the field coil, which rotates with the rotor, and the external power supply, which is fixed.

In the context of the rotary electric machine for electric or hybrid vehicles, the rotor is designed to rotate at high speeds, which may affect the holding of the field coil due to centrifugal forces. This may weaken the electrical insulation of the field coil, and even lead, in most extreme cases, to short-circuits or to a break of a tooth. A conventional solution, to improve the holding of the field coil to the centrifugal forces, is to use wedge elements between adjacent teeth of the plurality of teeth.

Besides, a conventional solution to electrically insulate the field coil from the stack of laminations is to provide an insulation paper in-between the plurality of teeth, as described in document EP2807726A1. In a general manner, the insulation paper is pre-folded and positioned manually over the stack of laminations before proceeding with the winding of the field coil above the insulation paper. The positioning of the insulation paper thus needs to be secured; otherwise, the insulation paper could be damaged or misplaced during the winding process. This could limit the electrical insulation between the field coil and the stack of laminations. Moreover, securing the positioning of the insulation paper is complex from a manufacturing point of view.

In this context, the main objective of the present invention is to provide a rotor with wedge elements and insulation papers, and an associated method for producing the rotor, which is easier to manufacture.

### SUMMARY OF THE INVENTION

More specifically, the present invention relates to a rotor for a rotary electric machine, the rotor comprising a rotor shaft configured to rotate around an axis of rotation, a rotor body formed of a stack of laminations having a plurality of teeth projecting radially and slots corresponding to space between two adjacent teeth of the plurality of teeth, and a field coil wound around each tooth of the plurality of teeth. The rotor body is also commonly referred as rotor package. The rotor body is mounted coaxially on the rotor shaft. The rotor further comprises an insulation paper extending axially and arranged on walls of one respective slot of the slots between the rotor body and the field coil such that to electrically insulate the rotor body from the field coil. The rotor also comprises a wedge element extending axially and arranged in the respective slot, the wedge element being configured to be axially slid against the two adjacent teeth of the respective slot.

In addition, the insulation paper has two flap portions projecting from the walls of both two adjacent teeth of the respective slot. The two flap portions are configured to come respectively against two contact surfaces of the wedge element arranged in the respective slot. The two contact surfaces are preferably flat so that they easily complement the two flap portions of the insulation paper. However, the two contact surfaces may also be substantially flat with a peripheral curved portion, or substantially curved.

The invention also concerns a method for producing the rotor as described previously, the method comprising the following successive steps for each respective slot of the slots:
- placing the insulation paper within the respective slot such that the insulation paper extends over the walls of the respective slot and protrudes axially from the rotor body by a distance at an axial end of the rotor body;
- pressing the two contact surfaces of the corresponding wedge element substantially radially against an axial end of the insulation paper such that to bend the insulation paper until forming the two flap portions at the axial end of the insulation paper;
- sliding axially the corresponding wedge element between the corresponding two adjacent teeth such that to bend the insulation paper over an axial length of the insulation paper.

The present invention provides thus the substantial gain of easing the installation of the insulation paper, which is generally performed manually. Especially, when the insulation paper has flap portions, the folding of the flap portions may be intricate to perform. Using the wedge element to bend the insulation paper such that to form the flap portions facilitates considerably the setting up of the insulation paper, and thus advantageously reduces the time and cost for producing the rotor.

Advantageously, the axial length of the insulation paper is slightly superior to an axial length of the rotor body, such that have the insulation paper protruding axially from the rotor body. Then, the part of the insulation paper protruding axially is used for the step of pressing the wedge element against the axial end of the insulation paper.

Advantageously, the two contact surfaces of the wedge element are arranged on a side facing the insulation paper respectively of two intermediary portions of the wedge element, another side of the two intermediary portions facing a bottom surface of the corresponding tooth of the two adjacent teeth. The two intermediary portions allow advantageously to add mechanical strength to the wedge element, and thus to improve the mechanical holding at the junction between the wedge element and the two adjacent teeth.

Advantageously, a cavity is arranged between each one of the two intermediary portions and the bottom surface of the corresponding tooth of the two adjacent teeth. The cavity adds advantageously radial and tangential degrees of freedom to the possible movements of the wedge element.

Advantageously, the wedge element has substantially a triangle or a trapezoidal cross section with a corner portion of the wedge element being directed towards the axis of rotation. Although, other shapes of the wedge element are also possible.

Advantageously, the wedge element is made out of an insulation material, for instance a plastic material. Thus, the wedge element electrically insulates the field coil from the rotor body. Although, other materials are also possible for the wedge element.

Advantageously, the wedge element has an axial wedge length slightly inferior to the axial length of the rotor body.

Preferably, each one of the slots is configured to accommodate the insulation paper and the wedge element.

Advantageously, the rotor comprises a potting material which fills the slots.

Advantageously, the rotor comprises two end caps coming against two axial ends of the rotor body, the two end caps being configured to cover coil ends of the field coil and to be sealed with the rotor body.

According to an aspect of the invention, the invention relates to the rotary electric machine comprising the rotor as described previously and a stator.

Another aspect of the invention is the electric drive, comprising the rotary electric machine and an inverter configured to convert a direct current voltage coming from a high-voltage power supply battery into an alternating current voltage so as to supply the stator of the rotary electric machine with the AC voltage. The AC voltage may be a multiphase AC voltage, especially a three-phase voltage. The rotor is advantageously supplied with a DC voltage. Preferably, a unique power converter is used for supplying both the AC voltage to the stator and the DC voltage to the rotor.

A further aspect of the invention is an electric of a hybrid vehicle, comprising the electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of a view of an example of a rotor according to an embodiment of the invention;
Figures 2 and 3 are schematic diagrams of a partial cut views of an example of the rotor according to an embodiment of the invention respectively before and after inserting a wedge element between two adjacent teeth of the rotor;
Figure 4 is a schematic diagram of a partial view of an example of the rotor according to an embodiment of the invention zoomed on the wedge element;
Figure 5 is a schematic diagram of an automotive electric or hybrid vehicle comprising the rotor of a rotary electric machine according to an embodiment of the invention.

### DETAILED DESCRIPTION

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

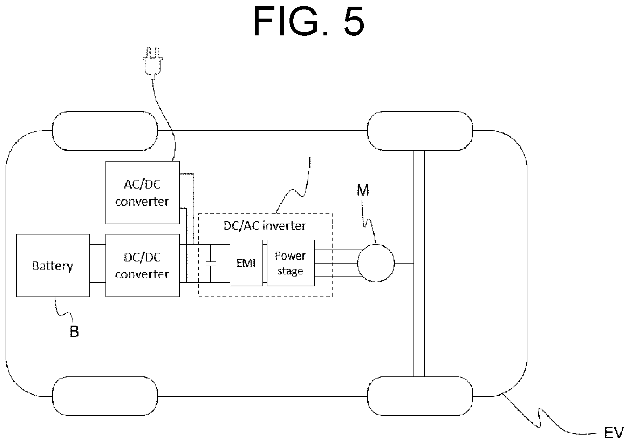

In reference to Figure 5, an aspect of the invention is an electric vehicle or a hybrid electric automotive vehicle EV comprising wheels and an electric drive configured to drive at least indirectly at least one of the wheels of the vehicle. The vehicle may comprise a high-voltage power supply battery B, preferably a rechargeable battery, for providing electric power to the electric drive. Although, the invention is not limited to this domain.

Another aspect of the invention is the electric drive comprising a rotary electric machine M and an inverter I configured to convert a direct current (DC) voltage coming from the high-voltage power supply battery B into an alternating current (AC) voltage in order to supply the stator of the rotary electric machine M with AC voltage. The rotary electric machine M may in particular be a three-phase rotary electric machine supplied with a three-phase AC voltage. The rotor is advantageously supplied with a DC voltage. Preferably, a unique power converter is used for supplying both the AC voltage to the stator and the DC voltage to the rotor.

The invention also relates to the rotary electric machine comprising a stator, referring to a fixed part of the rotary electric machine, and a rotor, referring to a rotating part of the rotary electric machine. The rotor is, in particular, an electric excited rotor, also commonly referred as a wound rotor or a slip ring rotor. More precisely, the stator presents an annular shape and surrounds coaxially the rotor. Then, the rotary electric machine comprises a casing covering both the stator and the rotor. Ordinarily, the stator comprises a stator body formed of a stack of stator laminations having a plurality of stator teeth projecting radially, and stator windings wound around the stator teeth.

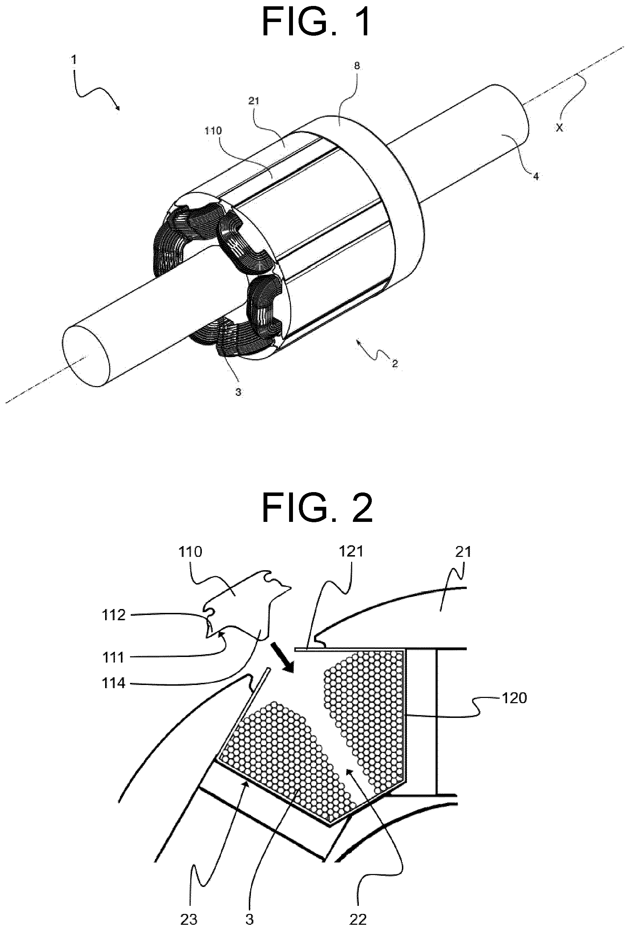

Figure 1 discloses a partial view of an example of the rotor 1 according to a further aspect of the invention. The rotor 1 comprises a rotor shaft 4 configured to rotate around an axis X of rotation, a rotor body 2 formed of a stack of laminations having a plurality of teeth 21 projecting radially, and at least one field coil 3 wound around each tooth of the plurality of teeth 21. The rotor body is also commonly referred as rotor package. The field coil 3 notably passes through slots, corresponding to space between two adjacent teeth of the plurality of teeth 21, and forms coil ends projecting axially from respectively two axial ends of the rotor body 2. The plurality of teeth 21 may notably comprise four, six, or eight teeth for example. The laminations are especially stacked along the axis X of rotation. The rotor body 2 is configured to be mounted coaxially on the rotor shaft 4, for instance the rotor body 2 may be press-fitted on the rotor shaft 4.

The field coil 3 is in particular connected to an external power supply through at least one slip ring (not represented in the drawings) mounted on the rotor shaft 4, namely on an axial end of the rotor shaft 4. The slip rings correspond to electro-mechanical devices configured to allow the exchange of electric power between a rotating element and a fixed element, here respectively the field coil 3 and the external power supply. The rotor 1 may further comprise a holder such that the at least one slip ring is mounted on the rotor shaft 4 through the holder.

The rotor 1 preferably comprises two end plates (not represented in the drawings) configured to come respectively against the two axial ends of the rotor body 2. The two end plates may present an annular shape, substantially similar to the shape of the two axial ends of the rotor body 2 such that to cover the two axial ends. Then, the field coil 3 advantageously may pass over the two end plates. In other words, the two end plates shall be located between the rotor body 2 and the coil ends of the field coil 3 such that to provide a mechanical holding of the stack of laminations and to electrically insulate axially the field coil 3 from the rotor body 2.

Furthermore, the rotor 1 advantageously comprises two end caps 8 coming against the two axial ends of the rotor body 2. The two end caps 8 are configured to cover the coil ends of the field coil 3. Only one end cap is represented in Figure 1 in order to provide an open view on one of the coil ends of the field coil 3 on one side of the rotor 1.

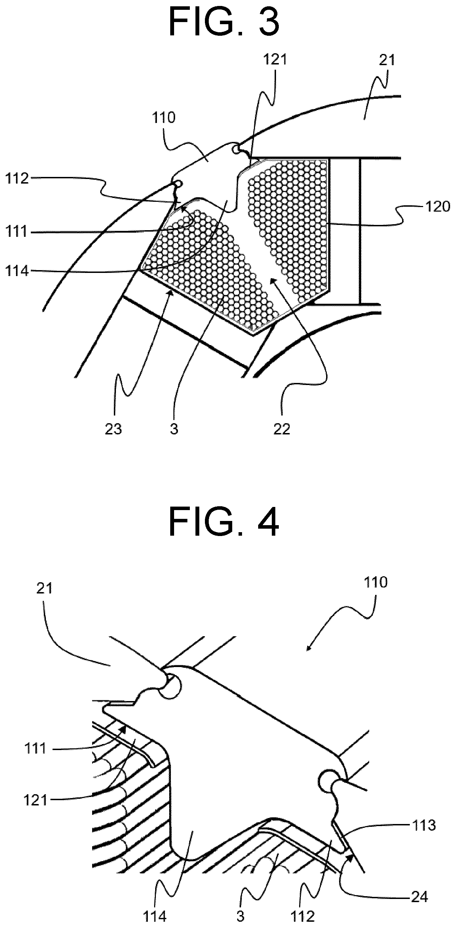

Figures 2 and 3 illustrate partial cut views of an example of the rotor zoomed on a respective slot of the slots 22 and the corresponding two adjacent teeth. The rotor comprises an insulation paper 120 extending axially and arranged on walls 23 of the respective slot between the rotor body and the field coil 3 such that to electrically insulate the rotor body from the field coil 3. The walls 23 of the respective slot especially correspond to faces of the rotor body directed towards the respective slot.

The rotor further comprises a wedge element 110 extending axially and arranged in the respective slot. The wedge element 110 is configured to be slid axially against the two adjacent teeth of the respective slot. Hence, the wedge element 110 is preferably configured to engage in a slide connection on both sides with the two adjacent teeth of the respective slot.

Preferably, each one of the slots 22 of the rotor body is configured to accommodate the insulation paper 120 and the wedge element 110. In other words, the rotor 1 especially comprises a number of wedge elements 110 and a number of insulation papers 120 both equal to a number of the slots 22. In the following description, only one of both the insulation papers and of the wedge elements will be described, although as previously mentioned, there is preferably a plurality of both of them.

The insulation paper 120 has two flap portions 121 projecting from the walls 23 of the two adjacent teeth of the respective slot. The two flap portions 121 are thus parts of the insulation paper 120 that do not lean on the walls 23 of the respective slot. For instance, the insulation paper 120 may comprise two folds. For each one of the two folds, on one side the fold, the insulation paper 120 extends along the walls 23 of the respective slot, and on another side of the fold, the corresponding flap portion 121 projects from the walls 23 of the respective slot.

The two flap portions 121 are then configured to come against respectively two contact surfaces 111 of the wedge element 110 arranged in the respective slot. The two contact surfaces 111 are preferably flat so that they easily complement the two flap portions 121 of the insulation paper 120. Although the two contact surfaces 111 may also be substantially flat with a peripheral curved portion, or substantially curved.

The invention also concerns a method for producing the rotor as described previously. Figures 2 and 3 respectively illustrate two stages of the method before and after inserting the wedge element 110. The method comprises the following successive steps for a respective slot of the slots 22:
- placing the insulation paper 120 within the respective slot such that the insulation paper 120 extends over the walls 23 of the respective slot and protrudes axially from the rotor body by a distance at an axial end of the rotor body, the distance may be of a few millimeters for example;
- notably winding the field coil 3 around the teeth over the insulation paper 120;
- pressing the two contact surfaces 111 of the corresponding wedge element 110 substantially radially against an axial end of the insulation paper 120 such that to bend the insulation paper 120 until forming the two flap portions 121 at the axial end of the insulation paper 120;
- sliding axially the corresponding wedge element 110 between the corresponding two adjacent teeth such that to bend the insulation paper 120 over an axial length of the insulation paper 120.

More precisely, with reference to Figure 2, pressing the wedge element 110 against the axial end of the insulation paper 120 is performed along a direction represented by a thick black arrow, which is a substantially radial direction.

Moreover, the axial length of the insulation paper 120 is especially slightly superior to an axial length of the rotor body, such that have the insulation paper 120 protruding axially from the rotor body. Then, the part of the insulation paper 120 protruding axially is used for the step of pressing the wedge element 110 against the axial end of the insulation paper 120.

The present invention provides thus the substantial gain of easing the installation of the insulation paper, which is generally performed manually. Especially, when the insulation paper has the flap portions, the folding of the flap portions may be intricate to perform. Using the wedge element to bend the insulation paper such that to form the flap portions facilitates considerably the setting up of the insulation paper, and thus advantageously reduces the related time and cost for producing the rotor.

Then, the slots 22, closed radially by the wedge elements and axially by the two end caps, are notably filled with a potting material, for instance a resin, such that to fix the field coil. Advantageously, the wedge elements and the two end caps are configured to be sealed with the rotor body such that to ease the injection process of the potting material. In addition, the wedge elements contribute to enhance the mechanical support of the field coil for an improved resistance to centrifugal forces. The two end caps provide in a similar manner the advantage of enhancing the mechanical holding of the rotor body. The field coil is thus prevented from moving due to centrifugal forces during in-service life of the rotor, especially when the rotor rotates at a high speed.

Besides, the insulation paper with the two flap portions coming against respectively the two contact surfaces of the wedge element allows to further facilitate the sealing between the wedge element and the rotor body with respect to the potting material by providing an additional barrier to the flowing of the potting material. Thus, the invention facilitates the manufacturing process of the rotor by allowing to limit potential leaks of the potting material during the injection process of the potting material.

Figure 4 illustrates a partial view of an exemplary embodiment of the rotor according to the invention zoomed on the wedge element 110. The wedge element is notably configured to be mounted on the rotor body after the winding of the field coil around the plurality of teeth and before the injection of the potting material through the slots.

More specifically, the two contact surfaces 111 of the wedge element 110 are arranged on a side facing the insulation paper 120 respectively of two intermediary portions 112 of the wedge element 110, another side of the two intermediary portions 112 facing a bottom surface 24 of the corresponding tooth of the two adjacent teeth. In other words, the two intermediary portions 112 are inserted between the two flap portions 121 of the insulation paper 120 and the bottom surface 24 of respectively the two adjacent teeth. The two intermediary portions allow advantageously to add mechanical strength to the wedge element, and thus to improve the mechanical holding at the junction between the wedge element and the two adjacent teeth.

The two intermediary portions 112 may further present a flat surface facing the field coil such that to provide a mechanical support of the field coil beneath the two intermediary portions.

Moreover, a cavity 113 may be arranged between each one of the two intermediary portions 112 and the bottom surface 24 of the corresponding tooth of the two adjacent teeth. Then, the cavity 113 adds advantageously radial and tangential degrees of freedom to the possible movements of the wedge element 110.

Preferably, the wedge element 110 has substantially a triangle or a trapezoidal cross section with a corner portion 114 of the wedge element 110 being directed towards the axis of rotation. Then, the corner portion 114 of the wedge element 110 is advantageously configured to ensure a substantially constant thickness of the potting material above the field coil 3. Moreover, the triangle or the trapezoidal cross section allows to ease the injection process of the potting material. Although, other shapes of the cross-section of the wedge element are also possible.

The wedge element is advantageously made out of an insulation material, for instance a plastic material. Thus, the wedge element electrically insulates the field coil from the rotor body. Moreover, the wedge element thus induces a limited mass increase of the rotor compared for instance to a solution where heads of the teeth are closer to one another. Although, other materials are also possible for the wedge element.

The wedge element 110 may advantageously have an axial wedge length slightly inferior to the axial length of the rotor body 2. If the wedge element is not to be removed after the injection of the potting material, this difference in length allows to have the wedge element not over constrained, especially if it is made out of a plastic material.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A rotor (1) for a rotary electric machine (M), the rotor (1) comprising:
- a rotor shaft (4) configured to rotate around an axis (X) of rotation;
- a rotor body (2) formed of a stack of laminations having a plurality of teeth (21) projecting radially and slots (22) corresponding to space between two adjacent teeth of the plurality of teeth (21), the rotor body (2) being mounted coaxially on the rotor shaft (4);
- a field coil (3) wound around each tooth of the plurality of teeth (21);
- an insulation paper (120) extending axially and arranged on walls (23) of one respective slot of the slots (22) between the rotor body (2) and the field coil (3) such that to electrically insulate the rotor body (2) from the field coil (3);
- a wedge element (110) extending axially and arranged in the respective slot, the wedge element (110) being configured to be axially slid against the two adjacent teeth of the respective slot;
the insulation paper (120) having two flap portions (121) projecting from the walls (23) of both two adjacent teeth of the respective slot, the two flap portions (121) being configured to come respectively against two contact surfaces (111) of the wedge element (110) arranged in the respective slot.

2. The rotor (1) as claimed in the previous claim, wherein an axial length of the insulation paper (120) is slightly superior to an axial length of the rotor body (2).

3. The rotor (1) as claimed in any of the preceding claims, wherein the two contact surfaces (111) of the wedge element (110) are arranged on a side facing the insulation paper (120) respectively of two intermediary portions (112) of the wedge element (110), another side of the two intermediary portions (112) facing a bottom surface (24) of the corresponding tooth of the two adjacent teeth.

4. The rotor (1) as claimed in the previous claim, wherein a cavity (113) is arranged between each one of the two intermediary portions (112) and the bottom surface (24) of the corresponding tooth of the two adjacent teeth.

5. The rotor (1) as claimed in any of the preceding claims, wherein the wedge element (110) has substantially a triangle cross section with a corner portion (114) of the wedge element (110) being directed towards the axis (X) of rotation.

6. The rotor (1) as claimed in any of the preceding claims, wherein the wedge element (110) is made out of an insulation material.

7. The rotor (1) as claimed in any of the preceding claims, wherein the wedge element (110) has an axial wedge length slightly inferior to the axial length of the rotor body (2).

8. The rotor (1) as claimed in any of the preceding claims, wherein each one of the slots (22) is configured to accommodate the insulation paper (120) and the wedge element (110) .

9. The rotor (1) as claimed in any of the preceding claims, comprising a potting material which fills the slots (22).

10. The rotor (1) as claimed in any of the preceding claims, wherein the rotor (1) comprises two end caps (8) coming against two axial ends of the rotor body (2), the two end caps (8) being configured to cover coil ends of the field coil (3) and to be sealed with the rotor body (2).

11. A method for producing the rotor (1) as claimed in any of the preceding claims, the method comprising the following successive steps for each respective slot of the slots (22):
- placing the insulation paper (120) within the respective slot such that the insulation paper (120) extends over the walls (23) of the respective slot and protrudes axially from the rotor body (2) by a distance at an axial end of the rotor body (2);
- pressing the two contact surfaces (111) of the corresponding wedge element (110) substantially radially against an axial end of the insulation paper (120) such that to bend the insulation paper (120) until forming the two flap portions (121) at the axial end of the insulation paper (120);
- sliding axially the corresponding wedge element (110) between the corresponding two adjacent teeth such that to bend the insulation paper (120) over the axial length of the insulation paper (120).

12. A rotary electric machine (M) for an electric or a hybrid vehicle (EV), the rotary electric machine (M) comprising the rotor (1) according to any of the claims 1 to 10.
